Europäisches Patentamt

European Patent Office

Office européen des brevets

(11) Publication number: **0 167 234**
**B1**

## (12) EUROPEAN PATENT SPECIFICATION

(45) Date of publication of patent specification: **02.08.89**

(21) Application number: **85303106.0**

(22) Date of filing: **01.05.85**

(51) Int. Cl.⁴: $H\ 04\ B\ 1/58$

(54) **An adaptive hybrid.**

(30) Priority: **09.05.84 CA 453967**

(43) Date of publication of application:
**08.01.86 Bulletin 86/02**

(45) Publication of the grant of the patent:
**02.08.89 Bulletin 89/31**

(84) Designated Contracting States:
**DE FR GB NL SE**

(56) References cited:
**DE-A-3 034 568**
**FR-A-2 485 842**
**GB-A-1 115 216**
**US-A-4 096 362**
**US-A-4 246 582**
**US-A-4 275 276**

(73) Proprietor: **NORTHERN TELECOM LIMITED**
**1600 Dorchester Boulevard West**
**Montreal Quebec H3H 1R1 (CA)**

(72) Inventor: **Arnon, Ephraim**
**168 Withrow Avenue**
**Nepean Ontario K2G 3N7 (CA)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

The invention relates to adaptive hybrids for interfacing a bidirectional communications channel with two oppositely-unidirectional channels and is especially, but not exclusively, applicable to adaptive hybrids for use in telephone systems.

In telephone systems and the like a hybrid is usually provided wherever it is necessary to segregate signal channels, for example by conversion from two-wire to four-wire transmission. Such conversion is necessary, for example, at repeaters, to enable amplification of the signals transmitted in opposite directions, and at channel banks.

Typically the hybrid has a first port connected to the bidirectional (two-wire) channel, second and third ports connected to the two unidirectional channels and a fourth port connected to a balancing network. The parameters of the balancing network are adjusted in dependence upon the characteristics of the bidirectional channel so as to minimize the signals passed between the second and third ports. In the case of a repeater, if the gain is sufficient oscillation (singing) may occur if the hybrid is not adequately balanced.

In a telephone system, the characteristics of the bidirectional (two-wire) channel may vary. For example, the channel may comprise one of a variety of cable types, lengths, terminations and may include a bridged tap which will affect its impedance.

In many applications it is sufficient merely to provide, say, two balancing networks and select which one is most appropriate. However, in more demanding applications, where gain is high, such as in line repeaters and digital channel banks, more precise balancing is necessary to achieve a high transhybrid loss.

One possible approach, known as "echo-cancellation", is to generate an error signal by means of, for example, a transversal filter, and subtract it from the actual signal. Such echo-cancellation systems are not entirely satisfactory because they use A-D and D-A conversion, which add noise. Also they usually require complex signal processing circuitry and have a relatively high power consumption.

An alternative approach is to use a manually-adjustable precision balancing network. Because the impedance to be balanced is complex, the balancing network has variable resistances and variable capacitances which are adjusted in accordance with prescription tables. To adjust these to balance the characteristics of the many different possible channels is very time-consuming and therefore expensive. It also depends upon the availability of good records for each channel, and being done manually, is expensive and tedious. It has also been proposed to inject test tones onto the channel and adjust the network. The use of test tones is not always acceptable.

GB—A—1115216 discloses a hybrid having an automatically variable impedance balancing network in which variable resistors in the balancing network are controlled by error signals derived from the integration product of two reference signals. The first reference signal is a component within a restricted frequency range of the signal appearing in the sending trunk line pair and the second reference signal is the component within the same frequency range appearing in the receiving trunk line pair or across the balancing network.

An object of the present invention is to eliminate, or at least mitigate, the disadvantages of the aforementioned approaches.

According to the present invention, a hybrid arrangement for interfacing a bidirectional transmission/communications channel with two unidirectional channels comprises:

a hybrid having a first port for connection to said bidirectional channel, a second port for connection to one of said two unidirectional channels, a third port for connection to the other of said two unidirectional channels and a fourth port for connection to a balancing network;

a balancing network connected to said fourth port;

correlation detection means for detecting correlation between first information signals coupled to the hybrid in one of said two unidirectional channels, and second information signals coupled from the hybrid in said other of said two unidirectional channels;

the correlation detection means including:

comparator means for comparing said first information signal in said one of the two unidirectional channels with one or more thresholds, storage means for storing an output of the comparator means for one or more predetermined time periods, control means responsive to the comparator means and storage means for selecting a swithing means;

the switching means being responsive to said control means for applying said second information signal to an integrator means for integrating said second information signal over a plurality of said time periods; and

adjusting means responsive to the integrator means for adjusting the value of a selected element of the balance network.

In reducing such correlation, transhybrid loss is increased and hence the balance is improved.

An embodiment of the invention will now be described by way of example only, with reference to tha accompanying drawings, in which:

Figure 1 is a block schematic diagram of an adaptive hybrid with a balancing network and means for automatically adjusting the network;

Figure 2 is a detailed diagram of the adaptive hybrid with means for adjusting three elements of the network; and

Figure 3 illustrates operation of the adaptive hybrid.

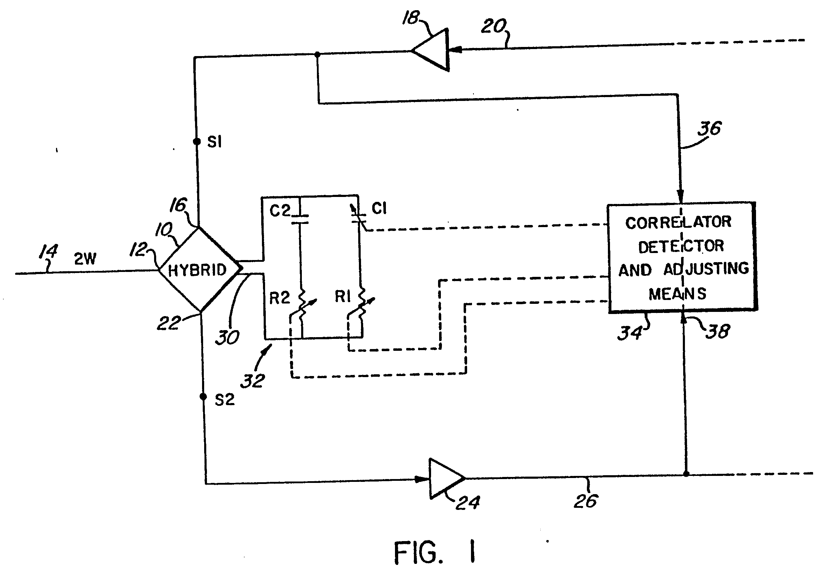

Referring to Figure 1, a hybrid 10 has a first port 12 connected to a bidirectional transmission line, in the form of a two-wire line 14. A second port 16 of the hybrid 10 is connected by way of an amplifier 18 to a two-wire line 20. The amplifier 18 is arranged so as to convey signals only in the direction towards the hybrid 10. Thus the transmission line 20 is rendered unidirectional, and S1 at port 16 comprises mostly the outgoing unidirectional signal.

A third port 22 of the hybrid 10 is connected by way of an amplifier 24 to a two-wire transmission line 26 which is rendered unidirectional by amplifier 24 which conveys signals only away from the hybrid 10. A fourth port 30 of the hybrid 10, opposite port 12, is connected to a balancing network 32, which is adjustable by means of correlation detection means 34 which itself has two inputs 36 and 38 connected to the outputs of amplifiers 18 and 24, respectively.

Were the hybrid 10 to be part of a line repeater, a second similar hybrid arrangement would be provided, with its own balancing network and correlation detection means. Otherwise the transmission lines 20 and 26 might continue to be segregated as transmit and receive channels, perhaps connected to a channel bank. Usually, however, a similar hybrid would eventually be provided to return to a two-wire line at the far end of the connection.

If the hybrid 10 were not properly balanced, part of a signal S1 entering port 16 would appear at port 22 as a transhybrid signal. Following amplification by amplifier 24 the transhybrid signal would be transmitted along line 26. On arrival at the far-end hybrid the signal might "leak across" to generate a further transhybrid signal which would return via line 20 to amplifier 18. If the gain in the system is sufficient, the system can oscillate or "sing". The aim when balancing the hybrid is to achieve sufficient loss, known as "transhybrid loss", across the hybrid, and so reduce transhybrid signals. A suitable transhybrid loss figure for a line repeater hybrid is 25 to 35 dB.

In the hybrid arrangement shown in Figure 1, adequate transhybrid loss is achieved by modifying the parameters of the balancing network 32 in dependence upon the degree of correlation between the signals at the respective outputs of amplifiers 18 and 24. Such correlation is determined by correlation-detection and adjusting means 34 which has inputs 36 and 38 from the aforementioned outputs of amplifiers 18 and 24, respectively. It will be appreciated that if the signal S2 comprises a signal component arriving from the two-wire line 14 and a transhybrid signal derived via the receive port 16 from amplifier 18, the transhybrid signal will result in correlation between signal S2 and S1. Therefore, the correlation-detector and adjusting means 34 is arranged to modify the balancing network 32 so as to reduce correlation between signals S1 and S2.

The signals involved generally will be complex analogue waveforms, such as voice signals, and the balancing network 32 will also be complex, in view of the complex nature of the impedance of the two-wire line 14. As shown in Figure 1, one embodiment of the balancing network comprises two parallel arms, each comprising a resistor and capacitor in series. Both the resistors, R1 and R2, and the capacitor C1 in series with R1, are adjustable by means of the correlation detector and adjusting means 34. Capacitor C2, which is in series with R2, is not adjustable. The different parameters of the network will each affect a corresponding different part of the signal. The correlation-detection and adjusting means 34 is arranged to identify the nature of the correlation, to which one of the elements it relates, and to adjust the appropriate element of the balancing network.

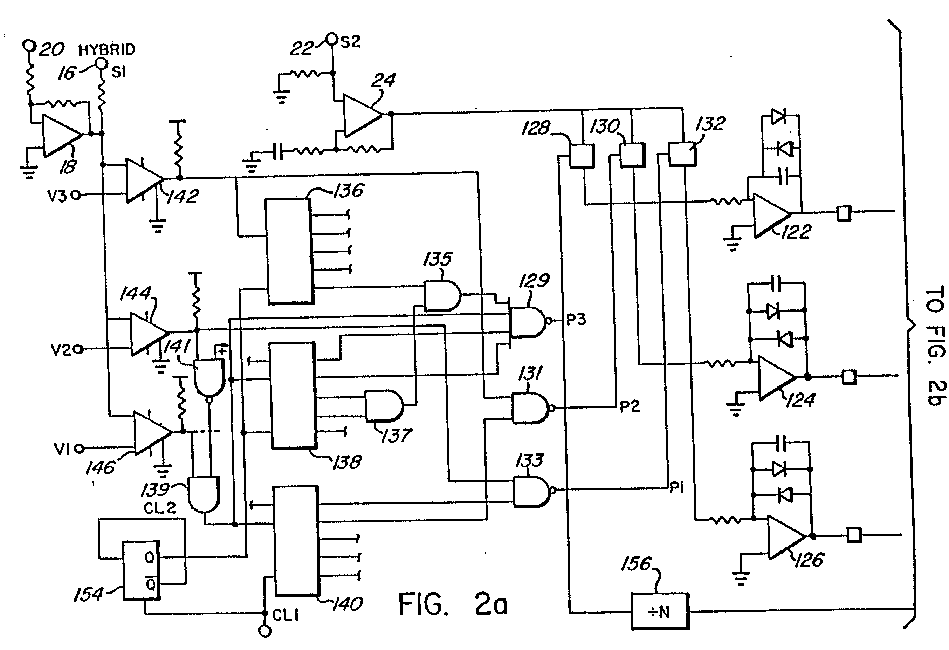

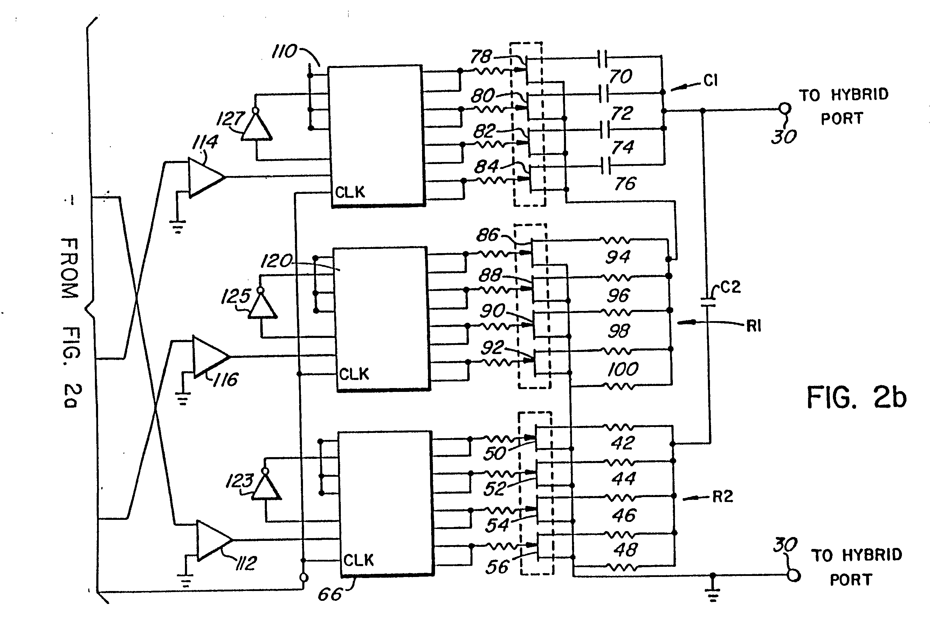

Referring now to Figure 2, the correlation-detection and adjusting means 34 and balancing network 32 are shown in more detail. The balancing network 32 comprises capacitor C2 having one terminal connected to hybrid port 30 and its other terminal connected by way of resistor R2 to the other, grounded terminal of port 30. Resistor R2 actually comprises a bank of resistors 42, 44, 46 and 48 connected to the port 30 by field-effect transistors 50, 52, 54, and 56, respectively. The gates of transistors 50, 52, 54, and 56 are controlled by corresponding ones of the parallel outputs of an up/down counter 66.

The second R-C arm is also connected across port 30. In this second arm, C1 is formed by a bank of four capacitors 70, 72, 74 and 76 connected in common to one terminal of port 30 and by a corresponding set of four field-effect transistors 78, 80, 82, and 84 to a common connection of a bank of resistors 94, 96, 98 and 100, respectively, which comprise R1. The latter set of resistors are connected by respective ones of a set of field-effect transistors 86, 88, 90 and 92 in common to the other terminal of hybrid port 30.

The gates of field-effect transistors 78, 80, 82 and 84 are controlled by the outputs of an up/down counter 110. The gates of field-effect transistors 86, 88, 90 and 92 are controlled in like manner by an up/down counter 120. Counters 66, 110 and 120 are clocked up or updated at a relatively slow rate, for example 0.5 Hz. As the contents of the up/down counters 66, 110 and 120 vary, the corresponding field-effect transistors will be controlled so as to vary the value of the associated element of the balancing network 32.

The counters 66, 110 and 120 have their up/down inputs connected by way of high gain amplifiers 112, 114 and 116 to the outputs of integrators 122, 124 and 126, respectively.

The integrators 122, 124 and 126 have oppositely-connected diode pairs 117, 119 and 121, respectively, connected between their inputs and outputs. These diodes serve as voltage limiters. The gain lost by employing the diodes is restored by the high gain amplifiers 112, 114 and 116. Additional inverting amplifiers 123, 125 and 127 connected across appropriate inputs of the counters 66, 110 and 120, respectively, serve as overflow limiters to stop each counter from returning to zero if its capacity is exceeded.

The inputs of the integrators are connected by corresponding ones of a set of switches 128, 130 and 132, to the output of amplifier 24. The switches 128, 130 and 132 serve to connect the integrators 122, 124 and 126 selectively to the output of amplifier 24, thus to apply to them the signal in the line 26 connected to hybrid port 22.

The switches 128, 130 and 132 are controlled by means of a signal analyzer circuit which closes the switches to "sample" the signal in line 26 in dependence upon the waveshape of the signal at port 16 of the hybrid. The signal analyzer circuit comprises control means in the form of a combination logic array including three NAND gates 129, 131 and 133, the outputs of which control switches 128, 130 and 132, respectively. The array also comprises three AND gates 135, 137 and 139, respectively, and a fourth NAND gate 141.

In addition to the combination logic array, the signal analyzer comprises a set of three shift registers 136, 138 and 140, respectively, and a set of three comparators 142, 144, and 146, respectively. The parts of the signal analyzer are interconnected as shown in Figure 2.

A divide-by-two flip-flop 154 provides a clock signal CL2 of 8 KHz from clock CL1 which is 16 KHz. It should be noted that shift register 140 is clocked at 16 KHz and shift registers 136 and 138 at 8 KHz.

Comparators 142, 144 and 146 each have one input (positive) connected to the output of amplifier 18 which feeds port 16 of the hybrid. The other inputs of the comparators 142, 144 and 146 are connected to voltage reference sources V3, V2 and V1, respectively.

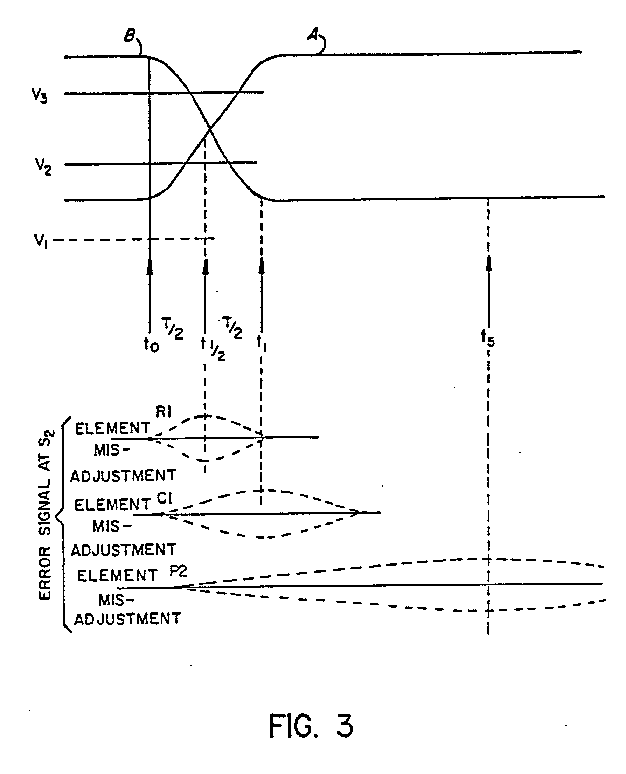

The comparators 142, 144 and 146 serve to divide the amplitude domain of the input or line signal from amplifier 18 into four regions. The shift registers 136, 138 and 140 divide the time domain in five periods, each of 125 microseconds duration. The first period is sub-divided into two equal parts by virtue of shift register 140 being clocked at 16 KHz. These divisions are illustrated in Figure 3, in which two curves of possible waveforms are shown. For adjusting elements R1 and C1, curve A is used. For element R2 curve B is used. In practice there is no difference in the results and, if preferred, the embodiment could be modified so that all elements were derived from the same curve, i.e. same polarity of signal.

NAND gate 133 performs, a NAND function on the first of the parallel outputs of shift register 140, which is clocked at 16 KHz, and the output of comparator 144. The input to shift register 140 is the output of AND gate 139 which performs an AND function on the output of comparator 146 and the output of NAND gate 141 which derives one input from the output of comparator 144, its other input being connected to a positive supply so that it acts as an inverter. When NAND gate 133, therefore, detects a transition of the signal from between V1 and V2 to above V2 in a time period T/2 seconds, it closes switch 132 to adjust, if necessary, element R1 of the balancing network, i.e. resistors 94, 96, 98 and 100 by way of integrator 126.

NAND gate 131 performs a NAND function on the second output of shift register 140 and the output of comparator 142. When NAND gate 131 detects a transition of the signal from between V2 and V1 to above V3 in time period T seconds, it closes switch 130 to apply error signal, if any, to integrator 124. Integrator 124 controls adjustment of element C1 of the balancing network.

NAND gate 129 has four inputs and performs a NAND function upon the first two inputs of shift register 138, the output of AND gate 139 and the output of AND gate 135. Gate 135 performs an AND function upon the fifth stage output of shift register 136 and, via AND gate 137, upon the third and fourth outputs of shift register 138. When NAND gate 129 detects that the signal, represented this time by curve B in Figure 3, has transited from above V3 to between V2 and V1 in a time period T seconds, and remained there for the next four time periods (T), it will close switch 128 resulting, if necessary, in adjustment of element R2, i.e. resistors 42, 44, 46 and 48, of the balancing network.

In operation, then, line (outgoing) signal is scanned and, when a waveform pattern of sufficient length and shape is detected, one of switches 128, 130 and 132 is closed for error or correlation measurement. Then the corresponding balance network element value is changed in such a direction as to minimize the error or correlation. In practice the error signal is integrated over a large number of samples so as to average out any non-correlated signal values that may occur due to far end signal. Thus the correlation sign is provided at the output of the corresponding integrator. The adjusting means, vis. the counter, then responds to such signal.

As previously mentioned, the signal analyzer divides the amplitude domain into four by means of comparators 142, 144 and 146, and the time domain by means of shift registers 136, 138 and 140. The combination logic or control means serves to sort out the waveforms that apply for each particular element of the balancing network and control application of the error signal to the integrator 122, 124 or 126 which controls that particular element value. When a particular shape is detected, the corresponding switch is closed, and the error signal applied to the corresponding integrator. The output of the integrator controls the direction of movement of the up/down counter so that the corresponding balance network element (C1, R1 and R2) increases or decreases at the next update clock time, CL3. The update clock rate is set so that the integrators have sufficient time to reflect the changes in the balancing conditions. This update clock is derived from one of the outputs of the signal analyzer, say the output of NAND gate 129, as indicated by ÷N counter 156 in Figure 2. Then, if the outgoing signal disappears, or its character changes so that no proper pattern is detectable, no update clock is provided. As a result, the network coefficients are frozen at their most recent setting. This setting will only change, and adaptation resume, when the signal reappears or a proper pattern is detected again.

Random signals, for example band limited Gaussian noise, speech or V. F. data, contain a variety of waveforms that fall within the above-specified amplitude and time domain boundaries. Thus element adjustment occurs in non-deterministic random signal conditions. Any far-end signal, being uncorrelated with the outgoing signal would not affect the setting of the balance network elements.

Whilst the balancing network described herein is particularly suitable for telephone lines, other networks could be employed for telephone lines or other communications channels.

## Claims

1. An adaptive hybrid arrangement for interfacing a bidirectional communications channel with two unidirectional channels (20, 26) comprising:

a hybrid (10) having a first port (12) for connection to said bidirectional channel, and a second port (16) for connection to one of said two unidirectional channels, a third port (22), for connection to the other of said two unidirectional channels and a fourth port (30) for connection to balancing network;

a balancing network (32) connected to said fourth port;

correlation detection means (34) for detecting correlation between first information signals (S1) coupled to the hybrid (10) in one of said two unidirectional channels, and second information signals (S2) coupled from the hybrid (10) in said other (26) of said two unidirectional channels; the hybrid characterized by:

the correlation detection means (34) including:

comparator means (142, 144, 146) for comparing said first information signal (S1) in said one (20) of the two unidirectional channels with one or more thresholds, (V1, V2, V3) storage means (136, 138, 140) for storing an output of the comparator means (142, 144, 146) for one or more predetermined time periods, control means (129, 131, 133, 135, 137) responsive to the comparator means (142, 144, 146) and storage means (136, 138, 140) for selecting a switching means (128, 130, 132);

the switching means (128, 130, 132) being responsive to said control means for applying said second information signal (S2) to an integrator means (122, 124, 126) for integrating said second information signal (S2) over a plurality of said time periods; and

adjusting means (66, 110, 120) responsive to the integrator means (122, 124, 126) for adjusting the value of a selected element (C1, R1, R2) of the balance network (32).

2. An adaptive hybrid arrangement as claimed in claim 1, wherein the means (66, 110, 120) for adjusting the value of the element (C1, R1, R2) comprises for each element an up/down counter (66, 110, 120) updated by a clock signal (CLK) derived from said control means (129) whereby adjustment occurs only when said signal (S1) in said one (20) of said two unidirectional channels has a predetermined pattern.

3. An adaptive hybrid arrangement as claimed in claim 2, wherein each adjustable element (C1, R1, R2) of said balancing network (32) comprises a plurality of components (e.g. 42, 70, 94) connected in parallel by a corresponding plurality of transistors (e.g. 50, 78, 86) each of said plurality of transistors being controlled by the respective outputs of said up/down counter (66, 110, 120).

4. An adaptive hybrid arrangement as claimed in claim 1, wherein the balancing network (32) has three adjustable elements comprising a first resistance (R1), a second resistance (R2) and a capacitance (C1), said control means (129, 131, 133, 137) being arranged to select said first resistance R1 for adjustment when the signal crosses from below to above a middle threshold in a time period $(t_{\frac{1}{2}})$ of a prescribed time interval, and to select the capacitance (C1) for adjustment when the signal crosses from below the middle threshold to above a higher threshold in a time period double said prescribed time interval.

5. An adaptive hybrid as claimed in claim 4, wherein said control means (129, 131, 133, 135, 137) is operative to select said second resistance (R2) for adjustment when the signal crosses from above said higher threshold to below said middle threshold in a time period $(t_{\frac{1}{2}})$ equal to said prescribed time interval, and remains there for a time period equal to several (t5) said time intervals.

6. An adaptive hybrid as claimed in claim 4, wherein said control means (129, 131, 133, 135, 137) is operative to select said second resistance (R2) for adjustment when the signal crosses from below said middle threshold to above said higher threshold in a time period $(t_{\frac{1}{2}})$ equal to said prescribed time interval, and remains there for a time period equal to several said time intervals (ts).

## Patentansprüche

1. Adaptive Gabelschaltungsanordnung zur Schnittstellenbildung zwischen einem bidirektionalen Nachrichtenverbindungskanal und zwei unidirektionalen Kanälen (20, 26) mit:

einer Gabelschaltung (10) mit einem ersten Anschluß (12) zur Verbindung mit dem bidirektionalen Kanal, einem zweiten Anschluß (16) zur Verbindung mit einem der beiden unidirektionalen Kanäle, einem dritten Anschluß (22) zur Verbindung mit dem anderen der beiden unidirektionalen Kanäle und einem vierten Anschluß (30) zur Verbindung mit einer Ausgleichsleitung,

einer mit dem vierten Anschluß verbundenen Ausgleichsleitung (32);

Korrelations-Erfassungsmittel (34) zum Erfassen der Korrelation zwischen ersten mit der Gabelschaltung (10) in einem der beiden unidirektionalen Kanäle gekoppelten Informationssignalen (S1) und zweiten von der Gabelschaltung (10) in den anderen (26) der beiden unidirektionalen Kanäle eingekoppelten Informationssignalen (S2); wobei die Gabelschaltung dadurch gekennzeichnet ist daß

das Korrelationserfassungsmittel (34) enthält:

Komparatormittel (142, 144, 146) zum Vergleichen des ersten Informationssignals (S1) in dem einen (20) der beiden unidirektionalen Kanäle mit einem Schwellwert oder mehreren Schwellwerten (V1, V2, V3), Speichermittel (136, 138, 140) zum Speichern eines Ausgangssignales des Komparatormittels (142, 144, 146) während eines Zeitabschnitts oder mehrerer vorbestimmter Zeitabschnitte, Steuermittel (129, 131, 133, 135, 137) in Abhängigkeit von dem Komparatormittel (142, 144, 146) und dem Speichermittel (136, 138, 140) zum Auswählen eines Schaltermittels (128, 130, 132);

wobei die Schaltermittel (128, 130, 132) auf die Steuermittel reagieren zum Anlegen des zweiten Informationssignals (S2) an ein Integratormittel (122, 124, 126) zum Integrieren des zweiten Informationssignals (S2) über ein Vielzahl der Zeitabschnitte; und

Einstellmittel (66, 110, 120), die auf die Integratormittel (122, 124, 126) reagieren zum Einstellen des Wertes eines ausgewählten Elementes (C1, R1, R2) der Ausgleichsleistung (32).

2. Adaptive Gabelschaltungsanordnung nach Anspruch 1, bei der das Mittel (66, 110, 120) zum Einstellen des Wertes des Elementes (C1, R1, R2) für jedes Element einen durch ein von dem Steuermittel (129) abgeleitetes Taktsignal (CLK) aufgefrischten Aufwärts/Abwärts-Zähler (66, 110, 120) umfaßt, wodurch die Einstellung nur dann auftritt, wenn das Signal (S1) in dem einen (20) der beiden unidirektionalen Kanäle ein vorbestimmtes Muster besitzt.

3. Adaptive Gabelschaltungsanordnung nach Anspruch 2, bei der jedes einstellbare Element (C1, R1, R2) der Ausgleichsleitung (32) eine Vielzahl von durch eine entsprechende Vielzahl von Transistoren (z.B. 50, 78, 86) parallel geschalteten Komponenten (z.B. 42, 70, 94) umfaßt, wobei jeder aus der Vielzahl von Transistoren durch das jeweilige Ausgangssignal des Aufwärts/Abwärts-Zählers (66, 110, 120) gesteuert ist.

4. Adaptive Gabelschaltungsanordnung nach Anspruch 1, bei der die Ausgleichsleitung (32) drei einstellbare Elemente besitzt, die einen ersten Widerstand (R1) einen zweiten Widerstand (R2) und eine Kapazität (C1) umfassen, daß das Steuermittel (129, 131, 133, 137) ausgelegt ist, den ersten Widerstand (R1) zur Einstellung auszuwählen, wenn das Signal von unter nach über einem mittleren Schwellwert überquert in einem Zeitabschnitt (t 1/2) eines vorgeschriebenen Zeitintervalls, und die Kapazität (C1) zur Einstellung auszuwählen, wenn das Signal von unter dem mittleren Schwellwert nach über einem höheren Schwellwert überquert in einem Zeitabschnitt, der das doppelte des vorgeschriebenen Zeitintervalls ist.

5. Adaptive Gabelschaltung nach Anspruch 4, bei der das Steuermittel (129, 131, 133, 135, 137) zur Auswahl des zweiten Widerstandes (R2) zur Einstellung wirksam ist, wenn das Signal von über dem höheren Schwellwert nach unter dem mittleren Schwellwert überquert in einem Zeitabschnitt (t 1/2), der gleich dem vorgeschriebenen Zeitintervall ist, und dort während eines Zeitabschnittes gleich einigen (t5) Zeitintervallen ist.

6. Adaptive Gabelschaltung nach Anspruch 4, bei der das Steuermittel (129, 131, 133, 135, 137) zur Auswahl des zweiten Widerstandes (R2) zur Einstellung wirksam ist, wenn das Signal von unter dem mittleren Schwellwert nach über dem höheren Schwellwert überquert in einem Zeitabschnitt (t 1/2), der gleich dem vorgeschriebenen Zeitintervall ist und dort während eines Zeitabschnittes gleich mehreren Zeitintervallen (ts) verbleibt.

**Revendications**

1. Agencement hybride adaptatif pour la mise en interface d'une voie de communication bidirectionnelle avec deux voies unidirectionnelles (20, 26) comprenant:

un circuit hybride (10) ayant un premier point de connexion (12) pour liaison à la voie bidirectionnelle, un second point de connexion (16) pour liaison à l'une des deux voies unidirectionnelles, un troisième point de connexion (22) pour liaison à l'autre des deux voies unidirectionnelles et un quatrième point de connexion (30) pour liaison à un réseau d'équilibrage;

un réseau d'équilibrage (32) relié au quatirème point de connexion;

un moyen de détection de corrélation (34) pour détecter une corrélation entre des premiers signaux d'information (S1) appliqués au circuit hybride (10) dans l'une des deux voies unidirectionnelles, et des seconds signaux d'information (S2) appliqués à partir du circuit hybride (10) à l'autre (26) des deux voies unidirectionnelles, le circuit hybride étant caractérisé par le fait que:

le moyen de détection de corrélation (34) comprend:

des moyens de comparateur (142, 144, 146) pour comparer le premier signal d'information (S1) dans l'une (20) des deux voies unidirectionnelles à un ou plusieurs seuils (V1, V2, V3), des moyens de stockage (136, 138, 140) pour stocker une sortie des moyens de comparateur (142, 144, 146) pendant une ou plusieurs périodes prédéterminées, des moyens de commande (129, 131, 133, 135, 137) répondant aux moyens de comparateur (142, 144, 146) et aux moyens de stockage (136, 138, 140) pour sélectionner un moyen de commutation (128, 130, 132);

les moyens de commutation (128, 130, 132) répondant aux moyens de commande pour appliquer le second signal d'information (S2) à un moyen d'intégrateur (122, 124, 126) pour intégrer le second signal d'information (S2) pendant une multitude de périodes; et

des moyens de réglage (66, 110, 120) répondant aux moyens d'intégrateur (122, 124, 126) pour ajuster la valeur d'un élément sélectionné (C1, R1, R2) du réseau d'équilibrage (32).

2. Agencement hybride adaptatif selon la revendication 1, dans lequel les moyens (66, 110, 120) pour ajuster la valeur de l'élément (C1, R1, R2) comprennent pour chaque élément un compteur progressif/régressif (66, 110, 120) mis à jour par un signal d'horloge (CLK) obtenu à partir du moyen de commande (129), d'où il résulte que le réglage ne se produit que lorsque le signal (S1) dans l'une (20) des deux voies unidirectionnelles a un profil prédéterminé.

3. Agencement hybride adaptatif selon la revendication 2, dans lequel chaque élément réglable (C1, R1, R2) du réseau d'équilibrage (32) comprend une multitude de composants (par exemple 42, 70, 94) connectés en parallèle par une multitude correspondante de transistors (par exemple 50, 78, 86), chaque transistor de la multitude de transistors étant commandé par les sorties respectives du compteur progressif/régressif (66, 110, 120).

4. Agencement hybride adaptatif selon la revendication 1, dans lequel le réseau d'équilibrage (32) à trois éléments réglables comprenant une première résistance (R1), une seconde résistance (R2) et un condensateur (C1), les moyens de commande (129, 131, 133, 137) étant agencés de manière à sélectionner la première résistance R1 pour réglage lorsque le signal passe du dessous au-dessus d'un seuil médian dans une période (t 1/2) d'un intervalle de temps prescrit, et à sélectionner la capacité (C1) pour réglage lorsque le signal passe du dessous du seuil médian au-dessus d'un seuil plus élevé dans une période double de l'intervalle de temps prescrit.

5. Agencement hybride adaptatif selon la revendication 4, dans lequel les moyens de commande (129, 131, 133, 135, 137), servant à sélectionner la seconde résistance (R2) pour réglage lorsque le signal passe du dessus du seuil plus élevé au-dessous du seuil médian dans une période (t 1/2) égale à l'intervalle de temps prescrit, et y reste pendant une période égale à plusieurs (t5) intervalles de temps.

6. Agencement hybride adaptatif selon la revendication 4, dans lequel les moyens de commande (129, 131, 133, 135, 137) servent à sélectionner la seconde résistance (R2) pour réglage lorsque le signal passe du dessous du seuil médian au-dessus du seuil plus élevé dans une durée (t 1/2) égale à l'intervalle de temps prescrit, et y reste pendant une période égale à plusieurs intervalles de temps (ts).

FIG. 1

EP 0 167 234 B1

TO FIG. 2b

FIG. 2a

FIG. 2b

FROM FIG. 2a

EP 0 167 234 B1

FIG. 3

4